Europäisches Patentamt

European Patent Office

Office européen des brevets

(11) Publication number: **0 315 326**
**A2**

## (12) EUROPEAN PATENT APPLICATION

(21) Application number: 88309350.2

(22) Date of filing: 07.10.88

(51) Int. Cl.⁴: **G05D 1/00** , **H04M 11/00** , **H04Q 7/04**

(30) Priority: **21.10.87 GB 8724659**

(43) Date of publication of application:
**10.05.89 Bulletin 89/19**

(84) Designated Contracting States:
**CH DE ES FR IT LI SE**

(71) Applicant: **THE GENERAL ELECTRIC COMPANY, p.l.c.**
**1 Stanhope Gate**
**London W1A 1EH(GB)**

(72) Inventor: **Robins, Michael Philip**
**230 Lower Hillmorton Road**
**Rugby Warwickshire(GB)**

(74) Representative: **George, Sidney Arthur**
**The General Electric Company p.l.c. GEC**
**Patent Department(Wembley Office) Hirst**
**Research Centre East Lane**
**Wembley Middlesex, HA9 7PP(GB)**

(54) **Control of guided vehicles.**

(57) In a location, such as a warehouse, in which there is a telephone communication system (4, 5, 6) which includes at least one handset (6) having a dial or a keypad, control apparatus for controlling the movements of an automated vehicle comprises a computer (1) for providing vehicle control signals, and an interface (8) which couples the computer to the telephone system and which is operable to feed to the computer data relating to desired vehicle movements in response to signals fed over the telephone system by operation of the dial or keypad. Information may be fed to the handset by the interface in the form of encoded audio tones or phrases generated by a speech synthesiser.

EP 0 315 326 A2

## Control of Guided Vehicles

This invention relates to control apparatus for controlling guided vehicles, and particularly for controlling vehicles which are automatically guided around warehouses or factory sites.

In some installations, request for movement of loads by guided vehicles are derived from a central computer system which controls the vehicles solely on the basis of signals generated by the plant itself.

In other installations, requests for load movement are initiated by operatives who enter such requests manually on specially-installed computer terminals which are located around the plant. Such computer terminals are provided with pushbuttons or keys with which the operatives send their movement requests to the computer. The computer's response to the request may be indicated by illumination of lamp at the terminal and/or by the displaying of text on a visual display unit.

Such terminals are expensive to manufacture and install. Furthermore, cable runs for feeding data between the terminals and the computer, and cables connecting the terminals to power supplies for feeding the lamps and/or VDUs, must be installed around the site. Such cable runs add significantly to the cost of the installation. The cost of production lost due to disruption of the plant during installation of the terminals and cable runs also has to be taken into account.

It is an object of the present invention to provide control apparatus in which these disadvantages of the conventional systems are alleviated.

According to the invention there is provided control apparatus for controlling movements of a vehicle in a location in which there is a telephone communication system which includes at least one handset having a dial or a keypad, the apparatus comprising a computer for providing vehicle control signals, and interface means coupling the computer to the telephone system and operable to feed to the computer data relating to a desired vehicle movement in response to a signal fed over the telephone system by operation of the dial or keypad.

An embodiment of the invention will now be described, by way of example, with reference to the accompanying schematic block diagram.

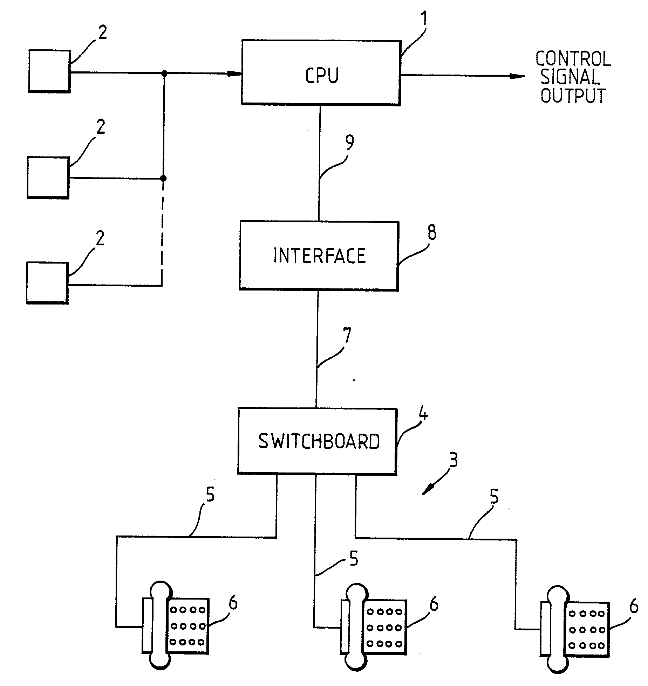

Referring to the drawing, apparatus for controlling the movements of a number of automatic guided vehicles around a site, such as a warehouse or a factory, comprises a computer 1 which generates control signals for feeding to the vehicles over a guide cable located round the floor of the site or via a radio link. The computer may receive data from sensors 2, which sense operating parameters, such as completion of machining or assembly operations carried out by particular sections of a plant, at various locations round the site, as in a conventional system.

The computer also receives data from operators located around the site, who wish to have a vehicle move to a particular location for the purpose of, for example, shifting a load, such as a quantity of completed workpieces.

However, instead of using special computer terminals, as in the conventional system described above, a standard telephone network 3 is used for communicating with the computer 1. This network comprises a standard manual or automatic switchboard 4 connected via normal extension lines 5 to standard telephone handsets 6 located around the site. Such a network is likely to be found already in existance on the site, for normal communication purposes. The handsets will have the usual keypad or dial arrangements for calling other extension lines and for making outside calls, via the switchboard 4. It is very likely that the handsets will already have been located close to the working positions of personnel who will want to initiate vehicle movements.

An extension line 7 of the network 3 is allocated to the computer 1. This line is connected to an interface 8 which produces, from the network signals on the line 7, signals suitable for operating the computer, and vice versa. The ouput of the interface 8 is fed to the computer over a line 9, and data are fed from the computer to the network over that line.

In operation of the system, any operative requiring movement of a load dials the extension line number of the computer. The switchboard 4 connects the operative's handset 6 to the interface 8. A validation code may have to be dialled by the operative to show that he has authority to access the computer. If the interface finds that the computer can be accessed, the interface responds to the operative's call by sending an audio signal to his handset inviting the operative to enter his load movement requirement using the keys or dial on the handset. The interface converts the keyed-in signals from the network into suitable signals for processing by the computer 1. These signals may be in ASCII code format.

The latter signals are processed by the computer, which decides whether the load movement request is valid and whether it can be carried out and sends an appropriate coded signal to the interface. The interface then passes a corresponding response, as an audio signal, to the operative. The operative may then enter another request or may terminate the call by replacing the handset.

The audio signals generated by the interface may be simple coded tones which are recognisable by the operative, or in a more sophisticated and more convenient system the audio signals may be phrases generated by a speech synthesiser, so that plain language instructions or information can be given to the operative via his handset.

It will be apparent that the apparatus of the present invention provides a very convenient method of passing requests and data backwards and forwards between any operative and the computer, using a standard telephone network available on the site. No special terminals, cable runs and trunking are required in order to provide communication with the computer. Although the handsets 6 in the above-described embodiment are connected to the switchboard 4 by lines 5, it would be possible to use handsets coupled to the switchboard via radio links. The handsets could then by carried around the site by the operatives.

## Claims

1. Control apparatus for controlling movements of a vehicle in a location in which there is a telephone communication system (4, 5, 6) which includes at least one handset (6) having a dial or a keypad, characterised by a computer (1) for providing vehicle control signals, and interface (8) means coupling the computer to the telephone system and operable to feed to the computer data relating to a desired vehicle movement in response to a signal fed over the telephone system by operation of the dial or keypad.

2. Apparatus as claimed in Claim 1, characterised in that the interface (8) is operative to feed information to the handset (6) in the form of audible signals.

3. Apparatus as claimed in Claim 2, characterised in that the audible signals comprise encoded audio tones.

4. Apparatus as claimed in Claim 2, characterised in that the audible signals comprise phrases generated by a speech synthesiser.

5. Apparatus as claimed in any preceding claim, characterised in that the interface (8) is operative to convert dialling signals from the dial or keypad into signals which are readable by the computer (1).

6. Apparatus as claimed in any preceding claim, characterised in that the or each handset (6) is coupled to said communication system via a radio link.